# EUROPÄISCHE PATENTANMELDUNG

(11) **EP 1 293 764 A2**
(43) Veröffentlichungstag der Anmeldung: **19.03.2003**
(21) Anmeldenummer: 02020189.3
(22) Anmeldetag: 10.09.2002
(51) Int. Cl.: G01L 11/02

(54) **Optische Druckmessanordnung**

(30) Priorität: 13.09.2001 DE 10146199
(71) Anmelder: Prettl, Rolf, 72072 Tübingen (DE)
(72) Erfinder: Borst, Peter, 88527 Unlingen (DE); Franke, Horst, Prof., 87534 Oberstaufen (DE)
(74) Vertreter: Steil, Christian, Dipl.-Ing.

(57) **Zusammenfassung**

Es wird vorgeschlagen eine Druckmeßanordnung (10) mit einem beweglichen Meßglied (14), das in Abhängigkeit von dem Druck (P1-P2) eines fluiden Mediums ausgelenkt wird, Federmitteln (38), die der Auslenkung des Meßgliedes (14) elastisch entgegenwirken, derart, daß der Druck (P1-P2) des fluiden Mediums einen Ansprechschwellenwert (51) übersteigen muß, damit das Meßglied (14) ausgelenkt wird, und einer Sensoreinheit (52-56), die ein elektrisches Meßsignal (U_{A}) abgibt, das von der Auslenkung des Meßgliedes (14) abhängt. Dabei beinhaltet die Sensoreinheit (70) eine optische Blende (56), die zusammen mit einer Auslenkung des Meßgliedes (14) in einen optischen Pfad (53) hinein ausgelenkt wird, eine Lichtquelle (52), die Licht (55) in den optischen Pfad (53) abstrahlt, und einen lichtempfindlichen Sensor (54), der Licht aus dem optischen Pfad (53) empfängt (Fig. 1).

## Beschreibung

Die vorliegende Erfindung betrifft eine Druckmeßanordnung mit einem beweglichen Meßglied, das in Abhängigkeit von dem Druck eines fluiden Mediums ausgelenkt wird, Federmitteln, die der Auslenkung des Meßgliedes elastisch entgegenwirken, derart, daß der Druck des fluiden Mediums einen Ansprechschwellenwert übersteigen muß, damit das Meßglied ausgelenkt wird, und einer Sensoreinheit, die ein elektrisches Meßsignal abgibt, das von der Auslenkung des Meßgliedes abhängt.

Derartige Druckmeßanordnungen sind allgemein bekannt.

Die Erfindung betrifft ferner ein Druckmeßgerät mit wenigstens einem durch eine Membram abgetrennten Druckraum, in dem sich ein fluides Medium befindet, und mit einer Druckmeßanordnung, wie oben genannt.

Die Druckmeßanordnungen sind gewöhnlich als Schaltanordnungen ausgebildet, die ein binäres Signal liefern. Entweder überschreitet der Druck des fluiden Mediums einen bestimmten Schwellenwert. Dann wird ein Signal "1" ausgegeben. Unterschreitet der Druck den Schwellenwert, wird ein Signal "0" ausgegeben.

Druckmeßgeräte mit einer "binären" Schaltanordnung sind auch unter dem Begriff Druckdose bekannt.

In einer Druckdose wird bei einer Veränderung des Druckes in dem Druckraum die in der Regel gummielastische Membran gewölbt. Die Membran ist mit dem Meßglied gekoppelt und schaltet durch den Wölbungsvorgang einen elektrischen Kontakt.

In der Praxis erfolgt das Schalten des elektrischen Kontaktes überwiegend auf mechanischem Wege. Dabei ist das Schaltglied unmittelbar mit einem elektrischen Kontakt versehen, der bei Auswölbung der Membran einen anderen Kontakt berührt und hierdurch einen elektrischen Stromkreis schließt.

Derartige Schaltanordnungen sind bekannt aus der US-A-3,585,328 sowie aus der DE 42 02 144 A1.

Bei der Schaltanordnung der DE 42 02 144 A1 ist eine Blattfeder zur Beeinflussung einer Schaltkraftschwelle vorgesehen. Eine Einstellschraube greift an einem mittleren Abschnitt der Blattfeder zur Veränderung der Schaltkraftschwelle an.

Derartige mechanische Lastschalter leiden an dem bekannten Nachteilen wie Korrosion, Funkenbildung, etc.

Aus der Praxis sind jedoch auch Druckdosen bekannt, bei denen der elektrische Kontakt berührungslos geschaltet wird. Der elektrische Kontakt ist hierbei häufig ein Reed-Kontakt. Die gummielastische Membran ist an ihrer Unterseite mit einem Membranteller ausgestattet, der auf einer einseitig eingespannten Blattfeder aufliegt. Von der Unterseite der Blattfeder drückt eine einstellbare konische Schraubenfeder gegen die Blattfeder, um die Schaltkraftschwelle zu bilden. Am Endbereich des freien Endes der Blattfeder ist ein Permanentmagnet befestigt, so, daß er schräg oberhalb des Reed-Kontaktes angeordnet ist.

Bei einer Druckerhöhung wird mittels der Membran eine Kraft gegen die Druckkraft der konischen Schraubenfeder ausgeübt. Sobald die mittels der Schraubenfeder eingerichtete Schaltkraftschwelle überstiegen wird, wird die Membran soweit ausgelenkt, daß die Blattfeder mit dem daran hängenden Permanentmagneten so nahe an den Reed-Kontakt gelangt, daß dieser schaltet.

Aus der DE 91 08 159 U1 ist eine weitere derartige Schaltanordnung bekannt, bei der eine Schaltkraftschwelle durch zwei gleichsinnig gepolte Permanentmagnete eingerichtet ist.

Aus der GB-1,139,162 ist ebenfalls ein druckbetriebener Magnetschalter bekannt. Ein Schaltmagnet zur Betätigung eines Reed-Kontaktes ist unmittelbar an einer Membran festgelegt. Zur Einrichtung einer Schaltkraftschwelle ist ein elastisches Element vorgesehen, das von oben auf den Schaltmagneten einwirkt. Die Vorspannung des elastischen Elementes soll einstellbar sein.

Die Druckdosen können auch als Differenzdruckdosen ausgebildet sein, wobei zwei je unter Druck stehende fluide Medien, z.B. Gase, durch die Membran getrennt sind. Anwendungsfälle sind bspw. Heizthermen, bei denen die Druckdose durch Erfassung der Drücke vor und nach einem Gebläse erkennt, ob im Abgasweg Überoder Unterdruck herrscht.

Die Schaltkraftschwelle soll dabei Differenzdrücken im Bereich von einigen wenigen Pascal bis zu einigen hundert Pascal entsprechen. Bei derart niedrigen Drücken und folglich geringen Schaltkraftschwellen (die Membran einer typischen Druckdose für eine Heiztherme hat einen Durchmesser von circa 5 cm und folglich eine Fläche von circa 20 cm², wodurch Schaltkräfte im Bereich von 0,001 N übertragen werden) sind die einzelnen konstruktiven Elemente, insbesondere die Federeinrichtungen sehr filigran und empfindlich. Das Einstellen der Schaltkraftschwelle erfolgt bei derartigen Druckdosen in mehreren Stufen. Dabei ist sowohl die Lage und folglich die Vorspannkraft einer konischen Schraubenfeder einstellbar als auch die Relativlage des Reed-Kontaktes zum Permanentmagneten.

Das von einer derartigen Druckdose gelieferte digitale Schaltsignal wird bspw. dazu verwendet, einen Lüfter im Abgasweg einer Heiztherme ein- bzw. auszuschalten. Hierdurch soll gewährleistet werden, daß in der Heiztherme immer eine möglichst günstige Verbrennung mit einem optimalen Rückstaudruck im Abgasweg stattfinden kann.

Ferner ist aus "Diesel-Einspritzsysteme/Unit injector system/Unit pump system" aus Diesel-Motor-Management, Technische Unterrichtung, Bosch, Ausgabe 1999 ein mikromechanischer Drucksensor bekannt, der bspw. als Saugrohr- oder Ladedrucksensor verwendet werden kann. Der Drucksensor mißt einen Druck gegen ein Referenzvakuum über einen kontinuierlichen Bereich von bspw. 2 bis 400 kPa. Der Drucksensor weist einen Silizium-Chip auf, in den eine dünne Membran eingeätzt ist. Auf der Membran sind vier Meßwiderstände angeordnet, deren elektrischer Widerstand sich unter mechanischer Spannung ändert. Die Widerstände arbeiten nach dem piezo-resistiven Effekt.

Vor diesem Hintergrund ist es die Aufgabe der Erfindung, eine verbesserte Druckmeßanordnung bzw. ein verbessertes Druckmeßgerät mit einer derartigen Druckmeßanordnung anzugeben.

Diese Aufgabe wird gemäß einem ersten Aspekt der vorliegenden Erfindung dadurch gelöst, daß die Sensoreinheit eine optische Blende, die zusammen mit einer Auslenkung des Meßgliedes in einen optischen Pfad hinein ausgelenkt wird, eine Lichtquelle, die Licht in den optischen Pfad abstrahlt, und einen lichtempfindlichen Sensor aufweist, der Licht aus dem optischen Pfad empfängt.

Die optische Sensoreinheit gemäß dem ersten Aspekt der vorliegenden Erfindung arbeitet berührungslos. Ferner kann eine optische Sensoreinheit besonders exakt arbeiten und ist vergleichsweise kostengünstig.

Gemäß einem zweiten Aspekt der vorliegenden Erfindung wird die obige Aufgabe dadurch gelöst, daß die Federmittel eine einseitig eingespannte Blattfeder aufweisen, daß ferner Mittel vorgesehen sind, um die Lage der Einspannstelle zu verändern, so daß durch Veränderung der Lage der Einspannstelle der Ansprechschwellenwert eingestellt werden kann, und daß ferner die Sensoreinheit einen kontinuierlichen Wegsensor aufweist, der in Abhängigkeit von der Auslenkung des Meßgliedes ein kontinuierliches Signal abgibt, das dem Druck des fluiden Mediums entspricht.

Durch die besondere Ausgestaltung der Federmittel mit der veränderbaren Lage der Einspannstelle der Blattfeder läßt sich der Ansprechschwellenwert besonders fein einstellen. Es werden folglich die Voraussetzungen geschaffen, um eine hohe Meßempfindlichkeit bei einfacher Konstruktion zu erzielen. Dabei kann die Vorspannung der Blattfeder verändert werden, ohne daß die Blattfeder selbst berührt werden muß. Folglich kann die Einstellung der Vorspannung erfolgen, ohne daß zusätzliche Reibungsverluste erzeugt werden.

Eine binäre Schaltanordnung mit einem entsprechenden Aufbau ist bekannt aus den älteren Anmeldungen DE 100 13 816 sowie EP 01 106 862.4, auf deren Offenbarungsgehalt hiermit vollinhaltlich Bezug genommen wird. Demgegenüber unterscheidet sich die vorliegende Erfindung gemäß dem zweiten Aspekt der vorliegenden Erfindung dadurch, daß die Sensoreinheit einen kontinuierlichen Wegsensor aufweist, der in Abhängigkeit von der Auslenkung des Meßgliedes ein kontinuierliches Meßsignal abgibt, das dem Druck des fluiden Mediums entspricht.

Der kontinuierliche Wegsensor ist vorzugsweise eine optoelektronische Sensoreinheit in Übereinstimmung mit dem ersten Aspekt der vorliegenden Erfindung, kann jedoch auch gebildet sein mittels Dehnungsmeßstreifen, Hall-Sensoren, Tauchankerspulen, Piezosensoren etc. Die optoelektronische Sensoreinheit ist jedoch bevorzugt.

Es versteht sich, daß der kontinuierliche Wegsensor gemäß dem zweiten Aspekt der vorliegenden Erfindung vorzugsweise ein berührungsloser Wegsensor ist.

Die Aufgabe wird auf diese Weise vollkommen gelöst.

In einer vorteilhaften Weiterbildung des ersten Aspektes der vorliegenden Erfindung hängt die empfangene Lichtmenge von der Auslenkung der optischen Blende hinein in den optischen Pfad ab und die Sensoreinheit gibt ein kontinuierliches Meßsignal ab, das dem Druck des fluiden Mediums entspricht.

Im Unterschied zu herkömmlichen druckgesteuerten Schaltanordnungen ist der Ausgang folglich nicht "binär". Vielmehr kann das Meßsignal, je nach Auslenkung des Meßgliedes, eine Mehrzahl von unterschiedlichen Werten annehmen, was im vorliegenden Zusammenhang als "kontinuierlich" bezeichnet wird. Kontinuierlich soll im vorliegenden Zusammenhang nicht notwendigerweise bedeuten, daß das Meßsignal in zeitlicher Hinsicht kontinuierlich ist.

Entscheidend ist folglich, daß die Druckmeßanordnung nicht nur erkennen kann, ob der Druck des fluiden Mediums einen bestimmten Wert überschritten hat, sondern messen kann, wie hoch der Druck jeweils ist. Folglich kann bspw. ein Lüfter im Abgasweg einer Heiztherme wesentlich feinfühliger angesteuert werden und bspw., je nach vorherrschendem Differenzdruck, den Lüfter langsamer oder schneller laufen lassen. Hierdurch läßt sich die Verbrennung der Heiztherme noch weiter optimieren, mit einem entsprechend gesteigerten Wirkungsgrad und geringerer Umweltbelastung.

Dabei ist es besonders bevorzugt, wenn der lichtempfindliche Sensor ein Photowiderstand ist, dessen elektrischer Widerstand von der empfangenen Lichtmenge abhängt.

Derartige Photowiderstände sind bspw. als Dämmerungsschalter oder Sensoren zur automatischen Helligkeitsregelung sowie zur Belichtungsmessung in Kameras bekannt.

Die Verwendung eines derartigen Photowiderstandes für eine optoelektronische Sensoreinheit einer Druckmeßanordnung ist besonders vorteilhaft. Denn Photowiderstände sind kompakt, kostengünstig und lassen sich leicht elektronisch ansteuern.

Gemäß einer weiteren bevorzugten Ausführungsform weist die Sensoreinheit eine elektrische Widerstandsmeßbrücke auf, wobei der Photowiderstand einer der Widerstände der Meßbrücke ist, und wobei die über der Meßbrücke abgreifbare Differenzspannung das kontinuierliche Meßsignal ist.

Durch Verwendung des Photowiderstandes innerhalb einer Widerstandsmeßbrücke läßt sich die von dem Photowiderstand empfangene Lichtmenge kostengünstig und doch hochpräzise erfassen.

Dabei ist es besonders bevorzugt, wenn die Meßbrücke einen weiteren verstellbaren Widerstand zum Abgleichen der Meßbrücke aufweist.

Ferner ist es bevorzugt, wenn die Sensoreinheit eine Stromquelle aufweist, die der Meßbrücke einen Meßstrom aufprägt.

Gemäß einer weiteren bevorzugten Ausführungsform ist die Lichtquelle eine lichtemittierende Diode (LED), insbesondere eine Infrarot-LED.

LEDs sind ebenfalls preisgünstig und baulich kompakt. Mit einer Infrarot-LED ergeben sich geringere thermische Probleme als mit einer herkömmlichen roten, grünen oder sonstigen LED, insbesondere dann, wenn die optoelektronische Sensoreinheit in einem kleinen Gehäuse aufgenommen ist.

Dabei ist es besonders bevorzugt, wenn die LED mit der Meßbrükke in Reihe geschaltet ist.

Insgesamt ergibt sich so eine kompakte elektronische Schaltung mit nur wenigen Bauteilen.

Gemäß einer weiteren bevorzugten Ausführungsform ist das Meßglied an einer elastischen Membran festgelegt, die zwei Druckräume voneinander trennt, in denen jeweils ein fluides Medium enthalten ist.

Auf diese Weise läßt sich die Druckmeßanordnung als Differenzdruckmeßanordnung verwenden.

Von besonderem Vorzug ist es ferner, wenn die Federmittel eine Blattfeder aufweisen, und insbesondere, wenn die optische Blende der optoelektronischen Sensoreinheit mit der Blattfeder verbunden ist.

Hierdurch läßt sich die optische Blende unabhängig von dem Meßglied ausgestalten. Da die Blattfeder mit dem Meßglied gemeinsam ausgelenkt wird, entspricht die Auslenkung der Blattfeder der Auslenkung des Meßgliedes.

Dabei ist es von besonderem Vorteil, wenn das Meßglied an einem mittleren Abschnitt der Blattfeder angreift und/oder wenn die optische Blende im Bereich des Endes der Blattfeder vorgesehen ist.

Entsprechend dem zweiten Aspekt der vorliegenden Erfindung ist es auch bei dem ersten Aspekt von Vorteil, wenn die Blattfeder einseitig eingespannt ist und wenn Mittel vorgesehen sind, um die Lage der Einspannstelle zu verändern, so daß durch Veränderung der Lage der Einspannstelle der Ansprechschwellenwert eingestellt werden kann.

Dabei ist es besonders bevorzugt, wenn die Blattfeder an einem Block eingespannt ist, der an einem freien Ende eines einseitig eingespannten elastischen Tragelementes angeordnet ist. Auf diese Weise ergibt sich in bezug auf die Einstellbarkeit des Ansprechschwellenwertes mittels der Blattfeder eine größtmögliche Flexibilität.

Dabei ist es besonders bevorzugt, wenn die Federrate des Tragelementes wesentlich größer ist als die Federrate der Blattfeder. Hierdurch wird gewährleistet, daß für die zum Einrichten der Ansprechschwelle erforderliche Kraft im wesentlichen allein die Federrate der Blattfeder maßgeblich ist.

Ferner ist es dabei besonders bevorzugt, wenn das Tragelement eine elektrische Leiterplatte ist.

Eine Leiterplatte ist in einer Anordnung zum berührungslosen Messen des Druckes generell meist ohnehin vorhanden. Ferner hat eine solche Leiterplatte mit einer Materialstärke im Bereich von wenigen Millimetern eine wesentlich größere Federrate als eine typische Blattfeder.

Dabei ist es besonders bevorzugt, wenn das freie Ende der Blattfeder und das freie Ende des Tragelementes bzw. der Leiterplatte in entgegengesetzte Richtungen weisen.

Auf diese Weise kann die Anordnung besonders kompakt ausgebildet werden.

Auch ist es bevorzugt, wenn die Blattfeder mittels eines ortsfesten Anschlages so vorgespannt ist, daß die Blattfeder in der nicht ausgelenkten Position im wesentlichen keine Kraft auf das Meßglied ausübt.

Auf diese Weise ist das Meßglied in der Ruheposition nicht von Vorspannkräften beaufschlagt. Bei Anwendung in einer Druckdose wird folglich vermieden, daß die Membran ständig mit einer Vorspannung beaufschlagt wird, wie dies bei der Vorspannung durch die eingangs erwähnte konische Schraubenfeder der Fall ist.

Bei dem erfindungsgemäßen Druckmeßgerät ist es von besonderem Vorzug, wenn die optischen Elemente der Druckmeßanordnung lichtdicht eingeschlossen sind.

Auf diese Weise kann gewährleistet werden, daß der Betrieb der optoelektronischen Sensoreinheit unabhängig von Fremdlicht ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Schnittansicht einer erfindungsgemäßen Druckmeßanordnung;
- Fig. 2: eine teilweise weggeschnittene Draufsicht auf die Druckmeßanordnung der Fig. 1 ohne Meßglied;
- Fig. 3: ein elektrisches Schaltungsdiagramm der Druckmeßanordnung;
- Fig. 4: ein Diagramm von Meßspannung über Weg der optischen Blende; und
- Fig. 5: ein Meßdiagramm von Meßspannung über dem zu messenden Druck des fluiden Mediums.

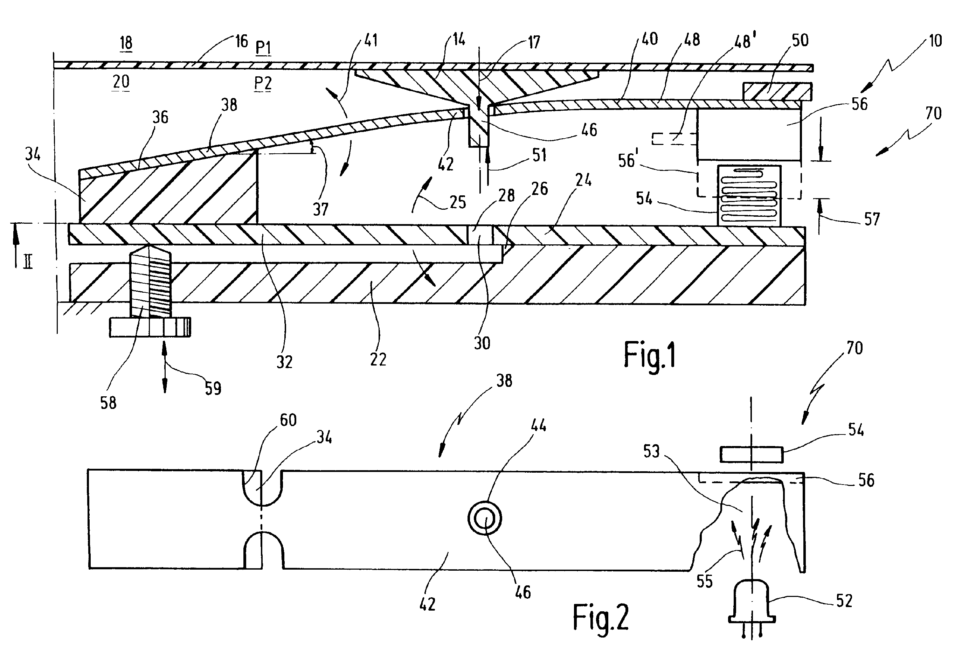

In Fig. 1 ist eine Druckmeßanordnung generell mit 10 bezeichnet.

Die Druckmeßanordnung 10 dient zum berührungslosen Messen der Differenz zwischen zwei Drücken P1 und P2. Der Druck P1 ist der Druck eines fluiden Mediums in einem Druckraum 18. Der Druck P2 ist der Druck eines fluiden Mediums in einem Druckraum 20. Die Druckräume 18, 20 sind durch eine Membran 16 voneinander getrennt. An der Membran 16 ist ein Meßglied 14 in Form eines Membrantellers festgelegt. Das Meßglied 14 besteht vorzugsweise aus Kunststoff. Die Membran 16 ist elastisch verformbar. Das Meßglied 14 ist an der Membran auf der dem Druckraum 20 zugewandten Seite festgelegt.

Sobald der Druck P1 in dem Druckraum 18 größer wird als der Druck P2 im Druckraum 20, wird die Membran 16 und damit das Meßglied 14 zum Druckraum 20 hin ausgelenkt. Dies ist in Fig. 1 schematisch durch einen Pfeil 17 angedeutet, der zum einen die Bewegungsrichtung des Meßgliedes 14 darstellt, als auch die Kraft, die aufgrund der Fläche der Membran auf das Meßglied 14 ausgeübt wird.

Die Druckmeßanordnung 10 weist ferner einen ortsfesten Träger 22 auf, der bspw. durch ein Gehäuse eines Druckmeßgerätes gebildet sein kann.

An dem Träger 22 ist eine Leiterplatte 24 festgelegt. Die Leiterplatte 24 ist nach der Art eines einseitig eingespannten Balkens (Kragarms) festgelegt. Ein Abschnitt der Leiterplatte 24 ist flächig mit dem Träger 22 verbunden. Ein freies Ende 32 der Leiterplatte 24 ist kragarmartig verschwenkbar, wie es durch einen Pfeil 25 angedeutet ist.

Die Leiterplatte 24 weist im Bereich der Einspannstelle 26 ein Loch 28 oder eine sonstige, schwächende Aussparung auf. Hierdurch wird ein Drehpunkt 30 für die Bewegungen 25 des freien Endes 32 nahe der Einspannstelle 26 eingerichtet.

An der Oberseite des Endbereiches des freien Endes 32 der Leiterplatte 24 ist ein Einspannblock 34 festgelegt, der vorzugsweise aus Kunststoff besteht. Die Oberseite 36 des Einspannblocks 34 ist unter einem Winkel 37 von 2° bis 45°, in der dargestellten Ausführungsform circa 5° geneigt. Durch Auswahl unterschiedlicher Einspannblöcke 34 mit unterschiedlichem Winkel der Oberseite 36 lassen sich, bei ansonsten unveränderten konstruktiven Parametern der Druckmeßanordnung 10, für unterschiedliche Applikationen geeignete Bauteile schaffen. Mit anderen Worten kann durch Wahl des Winkels der Oberseite 36 des Einspannblockes 34 eine Grundvorspannung einer darauf zu befestigenden Blattfeder 38 gewählt werden.

Auf der Oberseite ist eine einlagige, in der Draufsicht etwa rechteckige Feder 38 einseitig eingespannt. Das freie Ende 40 der Blattfeder 38 weist dabei in die dem freien Ende 32 der Leiterplatte 24 entgegengesetzte Richtung.

Die durch die einseitige Einspannung der Blattfeder 38 eingerichtete Beweglichkeit ist schematisch bei 41 gezeigt.

In einem mittleren Bereich 42 des freien Endes 40 ist die Blattfeder 38 mit einem zentralen Loch 44 versehen. Durch das Loch 34 greift ein nach unten weisender Zapfen 46 des Meßgliedes 14. Die Unterseite des Meßgliedes 14 ist ferner konisch zulaufend ausgebildet, so daß die Oberseite der Blattfeder 38 nur punkt- bzw. kreislinienförmig berührt wird.

Ein Endbereich 48 des freien Endes 40 der Blattfeder 38 liegt in einer Ruheposition, die in Fig. 1 in durchgezogenen Linien gezeigt ist, an der Unterseite eines ortsfesten Anschlages 50 an. Der Anschlag 50 kann einstückig mit dem ortsfesten Träger 22 ausgebildet sein. Der Anschlag 50 dient im wesentlichen der Vermeidung von Schwingungen des Systems aus Membran 16 und Blattfeder 38 bei einer Kraft 17 von im wesentlichen 0 N bzw. einer Druckdifferenz P1 minus P2 von im wesentlichen 0 Pascal.

Die Lage des Anschlages 50 ist so gewählt, daß die Blattfeder 38 in der Ruheposition vorgespannt ist. Ferner liegt die Oberseite des mittleren Bereiches 42 der Blattfeder 38 in der Ruheposition direkt unterhalb der Unterseite des Meßgliedes 14, und zwar so, daß die Membran 16 gegenüber ihrer entspannten Grundposition nicht ausgelenkt ist. Um die Blattfeder 38 jedoch gegenüber der Ruheposition auszulenken, ist eine Vorspannkraft zu überwinden, die in Fig. 1 schematisch bei 51 gezeigt ist.

Wenn die durch die Druckdifferenz P1 minus P2 auf das Meßglied 14 ausgeübte Kraft 17 größer ist als die Vorspannkraft 51, wird die Blattfeder 38 ausgelenkt, und zwar weg von dem Anschlag 50, hin zu der Leiterplatte 24.

An der Oberseite der Leiterplatte 24 sind eine Lichtquelle in Form einer Infrarot-LED 52 und ein Photowiderstand 54 angeordnet.

Zwischen der Infrarot-LED 52 und dem Photowiderstand 54 ist ein optischer Pfad 53 eingerichtet.

Die IR-LED 52 strahlt Infrarotlicht 55 in den optischen Pfad 53 ab, und zwar in Richtung hin zu dem Photowiderstand 54.

An dem Endbereich 48 der Blattfeder 38 ist eine nach unten hin zu der Leiterplatte 24 weisende optische Blende 56 in Form einer Fahne vorgesehen. Die optische Blende 56 kann einstückig mit der Blattfeder 38 ausgebildet sein und bspw. aus einem abgebogenen Blattfederabschnitt bestehen.

In der oben beschriebenen Ruheposition, die in Fig. 1 in durchgezogenen Linien gezeigt ist, deckt die optische Blende 56 den optischen Pfad 53 zwischen der IR-LED 52 und dem Photowiderstand 54 nicht ab. In alternativen Ausführungsformen ist es auch möglich, daß der Photowiderstand 54 in der Ruheposition bereits ein wenig abgedeckt ist, oder vollständig abgedeckt.

Infolge einer Auslenkung des Meßgliedes 14 wird die Blende 56 in den optischen Pfad 53 hinein ausgelenkt, wie es in Fig. 1 schematisch bei 56' gezeigt ist. Hierbei legt die optische Blende 56 einen Weg 57 zurück.

Der Photowiderstand 54 erhält folglich eine geringere Lichtmenge, so daß der elektrische Widerstand des Photowiderstandes 54 ansteigt. Bei der alternativen Ausführungsform wird die Blende aus dem Pfad zurückgezogen.

Die durch die Erhöhung der Druckdifferenz P1 minus P2 enstehende Auslenkung des Meßgliedes 14 und damit der Blattfeder 38 wird folglich in eine kontinuierliche Widerstandsveränderung umgesetzt.

An dem Träger 22 ist eine Einstellschraube 58 gelagert, die an der Unterseite des freien Endes 32 der Leiterplatte 24 angreift. Durch Verdrehen der Einstellschraube 58 in eine Richtung 59 wird das freie Ende 32 der Leiterplatte 24 je nach Bewegungsrichtung 25 nach oben oder unten bewegt. Hierdurch wird die eingespannte Seite der Blattfeder 38 um den Drehpunkt 30 relativ zu dem Träger 22 versetzt.

Mit anderen Worten läßt sich durch Verstellen der Einstellschraube 58 die Vorspannung der Blattfeder 38 einstellen. Dabei wird aufgrund des Anschlages 50 die Ruheposition des Endbereiches 48 des freien Endes 40 der Blattfeder 38 nicht verändert. Bei der Schwenkbewegung des freien Endes 32 um den Drehpunkt 30 wird der mittlere Bereich 42 des freien Endes 40 der Blattfeder 38 ebenfalls kaum oder gar nicht seine axiale Position verändern. Folglich führt eine Verstellung der Vorspannung der Blattfeder 38 im wesentlichen nicht zu einer veränderten Ausgangsbelastung der Membrane 16. Somit wird durch Verstellen der Vorspannung der Blattfeder 38 die Kinematik der Druckmeßanordnung 10 im übrigen nicht verändert.

Sofern kein Anschlag 50 vorhanden ist, wird durch Einstellen der Einstellschraube 58 der Endbereich 48 der Blattfeder 38 dem optischen Pfad 53 entweder angenähert oder von diesem weg bewegt. Hierdurch kann ein Ansprechabstand verringert oder vergrößert werden. Der Ansprechabstand ist jener Abstand zwischen optischer Blende und Photowiderstand 54, ab dem sich eine Auslenkung der optischen Blende 56 durch eine Widerstandsveränderung bemerkbar macht.

Der Drehpunkt des freien Endes 32 der Leiterplatte 24 läßt sich durch die Lage des Loches 28 (oder durch die Lage entsprechender seitlicher Aussparungen) und folglich durch Verengung der Gelenkbreite festlegen. Je nach Abstand des Drehpunktes 30 von der Einstellschraube 58 ist die Einstellempfindlichkeit gering oder hoch.

Wie es in Fig. 2 gezeigt ist, ist die Blattfeder im Bereich ihrer Einspannstelle mit seitlichen Aussparungen 60 versehen. Die Größe und Anordnung der Aussparungen 60 beeinflußt die Federrate der Blattfeder 38. Durch die Aussparungen 60 wird folglich eine Grundfederrate und folglich eine gewisse Grundvorspannung der Blattfeder 38 in der Ruheposition eingestellt. Die Vorspannung der Blattfeder 38 kann, ausgehend von der Grundvorspannung, mittels der Einstellschraube 58 fein eingestellt werden.

Anstelle der zwei gegenüberliegenden Aussparungen 60, wie sie in Fig. 2 gezeigt sind, kann die Blattfeder 38 auch mit einem zentralen Loch ausgestattet sein, das im Bereich der Einspannstelle vorgesehen ist. Dies ist bevorzugt, da die Blattfeder 38 dann verdrehsteifer gelagert ist.

Wie oben erwähnt, bestimmen die Aussparungen 60 die Federrate der Blattfeder 38. Für unterschiedliche Anwendungsfälle kann die gleiche Ausgangsblattfeder durch Vorsehen unterschiedlich großer Aussparungen 60 (oder eines entsprechenden Loches) verwendet werden. Hierdurch kann die Maßcharakteristik den jeweiligen Gegebenheiten angepaßt werden.

Die Kopplung zwischen dem Meßglied 14 und der Blattfeder 38 kann auch so erfolgen, daß anstelle eines Loches 44 in der Blattfeder 38 eine Mulde vorgesehen wird, in die der dann als Spitzenlager ausgebildete Zapfen 46 greift. Zur Verringerung der Reibung kann das Meßglied 14 an den Kontaktstellen zu der Blattfeder 38 mit Teflon beschichtet sein.

Generell läßt sich die gesamte Baugruppe aus Blattfeder 38, optischer Blende 56, Einspannblock 34 und dem freien Ende 32 der Leiterplatte 24 im wesentlichen reibungsfrei bewegen. Ferner läßt sich die Druckmeßanordnung 10 mit wenigen Bauteilen realisieren. Reibungs- und Koppelhysteresen sind verringert. Die Druckmeßanordnung 10 läßt sich mit nur einer einzigen Einstellschraube 58 einstellen und fein justieren. Dabei führt ein Anheben des freien Endes 32 aus der in Fig. 1 gezeigten Grundposition zu einer Verringerung der Vorspannkraft 51. Dies liegt an der relativen Anordnung zwischen Drehpunkt 30 und Einspannblock 34.

Natürlich läßt sich die Einstellbarkeit der Lage des Einspannblockes 34 auch auf andere Weise realisieren. Bspw. könnte der Einspannblock 34 in Richtung senkrecht zur Membran 16 verschieblich ausgebildet sein. Hierzu wäre eine geeignete Linearführung an dem Gehäuse 22 vorzusehen. Auch ist es möglich, eine alternative Drehachse einzurichten, so daß der Einspannblock 34 um sein hinteres (in Fig. 1 linkes) Ende verschwenkt wird.

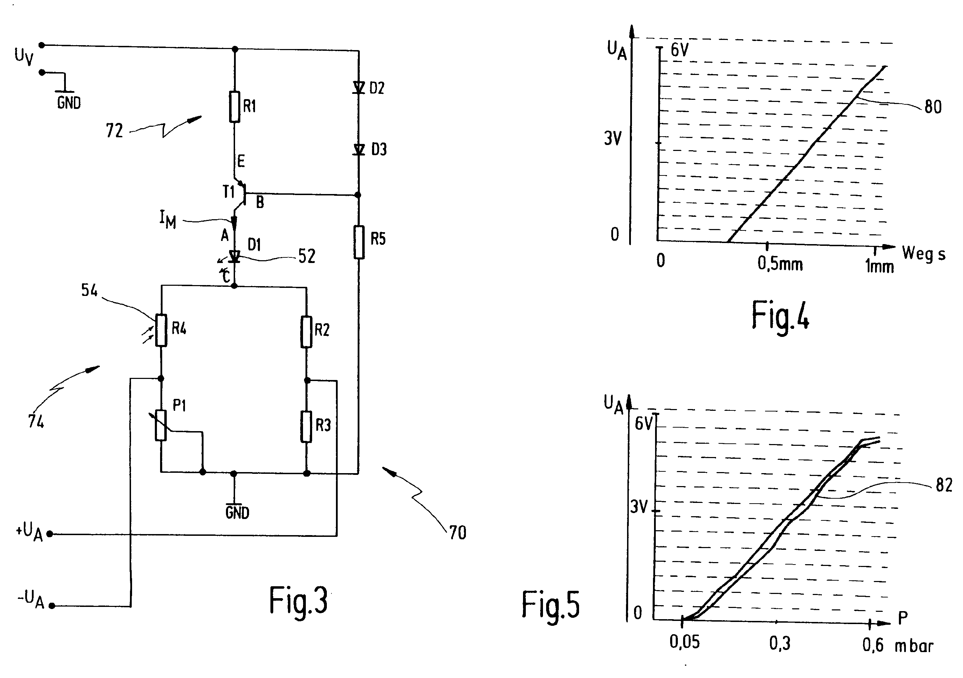

In Fig. 3 ist ein elektrisches Schaltungsdiagramm einer Sensoreinheit 70 gezeigt.

Die Sensoreinheit 70 beinhaltet eine Stromquelle 72 und eine Widerstandsmeßbrücke 74.

Die Stromquelle 72 ist an einem Ende mit einer Versorgungsspannung U_{V} verbunden und stellt einen Meßstrom I_{M} bereit. Die Stromquelle 72 ist mit einer Strombegrenzung ausgestattet.

An die Stromquelle 72 schließt sich eine Reihenschaltung aus einer IR-LED D1 (entsprechend der IR-LED 52) und der Widerstandsmeßbrücke 54 an.

Die Widerstandsmeßbrücke 74 enthält vier Widerstände, von denen einer ein Photowiderstand R4 (entsprechend dem Photowiderstand 54) ist. In dem gleichen Zweig der Meßbrücke ist ein weiterer verstellbarer Widerstand P1 vorgesehen, der zum Abgleichen der Meßbrücke 74 dient.

Über den Mittenanschlüssen der Widerstandsmeßbrücke 74 wird eine Meßspannung U_{A} abgegriffen.

Die Meßbrücke 74 ist so abgeglichen, daß die Meßspannung U_{A} im wesentlichen Null ist, wenn der optische Pfad 53 nicht durch die optische Blende 56 abgedeckt ist.

Fig. 4 zeigt ein Diagramm der Meßspannung U_{A} (Kurve 80) über dem Weg s der optischen Blende 56.

Man erkennt, daß bis zu einer Auslenkung von etwa 0,3 mm die Meßspannung U_{A} Null beträgt. Bis zu dieser Auslenkung verbleibt der optische Pfad 53 im wesentlichen unbeeinflußt durch die optische Blende 56. Mit weiterer Auslenkung der Blende 56 steigt der elektrische Widerstand des Photowiderstandes 54 an. Aufgrund der allgemein bekannten Funktionsweise einer Meßbrücke steigt folglich die Meßspannung U_{A} an. Man erkennt, daß die Meßspannung U_{A} mit dem Weg bis hin zu einer Auslenkung von einem Millimeter linear ansteigt.

Sofern sich eine derartige Charakteristik nicht über die gesamte Kennlinie des Photowiderstandes 54 ergibt, wird zum Erreichen einer derartigen Linearität der Photowiderstand 54 ausschließlich in einem linearen Bereiche seiner Kennlinie betrieben.

Folglich ergibt sich auch zwischen der Meßspannung U_{A} und der Auslenkung des Meßgliedes 14 ein linearer Zusammenhang. Die Auslenkung des Meßgliedes 14 wiederum ist proportional zu der Druckdifferenz P1 minus P2, so daß sich auch zwischen der Druckdifferenz P=P1-P2 ein linearer Zusammenhang ergibt, wie es in Fig. 5 bei 82 gezeigt ist.

Man erkennt, daß bereits kleinste Druckänderungen erfaßt werden, die Ansprechempfindlichkeit der Druckmeßanordnung 10 ist außerordentlich hoch. Ferner ist zu erkennen, daß eine sehr geringe Hysterese vorhanden ist, die für die geplanten Einsatzzwecke entweder vernachlässigbar oder leicht kompensierbar ist.

Eine derartige Kompensation kann an der Meßspannung U_{A} mittels üblicher Schaltungen vorgenommen werden. Das gleiche gilt für eine Temperaturkompensation, die man zur Verbesserung der Meßergebnisse vornimmt.

Die spitzwinklige Einspannung der Blattfeder 38 an dem Einspannblock 34 ermöglicht es auf vergleichsweise einfache Weise, eine Vorspannung für die Blattfeder auch in Gehäusen vorzusehen, die generell etwa parallel zu der Membranfläche 16 ausgerichtet sind.

Die Vorspannkraft 51 kann Druckdifferenzen im Bereich von einigen wenigen Pascal bis hin zu mehreren hundert Pascal entsprechen. Durch die Wahl des Einstellblockes und folglich des Winkels der Einspannung und/oder durch die Dimensionierung der Blattfeder 38 läßt sich die Ansprechschwelle grob vorwählen. Die Mittel zur Veränderung der Lage der Einspannstelle (Einstellschraube 58) dienen dann zur Feineinstellung.

Der Endbereich des freien Endes der Blattfeder ist mittels des Anschlages 50 etwa parallel zu der Membran 16 ausgerichtet. Auf diese Weise läßt sich der Anschlag zum einen konstruktiv besonders leicht integrieren. Ferner kann erreicht werden, daß das Meßglied unter einem nahezu senkrechten Winkel an der Blattfeder 38 angreift.

Die Druckmeßanordnung 10 läßt sich insbesondere im Abgaskanal von Heizthermen zur Steuerung eines Abgaslüfters verwenden. Der Lüfter kann dabei in seiner Leistung kontinuierlich oder in einer Vielzahl von Stufen verstellt werden, in Abhängigkeit von der jeweils erfaßten Druckdifferenz P1 minus P2.

Es ist wichtig festzustellen, daß mit der Sensoreinheit 70 sich bei einem Hub der optischen Blende 56 (und folglich der Membran 16) von nur einem Millimeter eine Meßspannung in dem vorteilhaften Bereich zwischen 0 und 6 Volt ergibt, mit anderen Worten, wird eine sehr hohe Ansprechempfindlichkeit realisiert.

Für die erfindungsgemäße Druckmeßanordnung 10 sind auch andere Anwendungsbereiche denkbar, bspw. die Messung des Wasserstandes in einer Waschmaschine.

Ferner ist es auch möglich, die erfindungsgemäße Druckmeßanordnung 10 als binäre Schaltanordnung zu verwenden. In diesem Fall könnte anstelle der Sensoreinheit 70 eine einfache Lichtschranke vorgesehen werden. Denn in einem solchen Fall kommt es lediglich darauf an, einen geeigneten Schwellenwert für das Umschalten einzurichten.

Natürlich kann auch die vorliegende Druckmeßanordnung 10 als Schaltanordnung verwendet werden, indem man die Meßspannung U_{A} mit einem geeigneten Komparator verknüpft, der eine bestimmte Schaltschwelle implementiert.

## Patentansprüche

1. Druckmeßanordnung (10) mit einem beweglichen Meßglied (14), das in Abhängigkeit von dem Druck (P1-P2) eines fluiden Mediums ausgelenkt wird, Federmitteln (38), die der Auslenkung des Meßgliedes (14) elastisch entgegenwirken, derart, daß der Druck (P1-P2) des fluiden Mediums einen Ansprechschwellenwert (51) übersteigen muß, damit das Meßglied (14) ausgelenkt wird, und einer Sensoreinheit (52-56), die ein elektrisches Meßsignal (U_{A}) abgibt, das von der Auslenkung des Meßgliedes (14) abhängt,
**dadurch gekennzeichnet, daß**
die Sensoreinheit (70) eine optische Blende (56), die zusammen mit einer Auslenkung des Meßgliedes (14) in einen optischen Pfad (53) hinein ausgelenkt wird, eine Lichtquelle (52), die Licht (55) in den optischen Pfad (53) abstrahlt, und einen lichtempfindlichen Sensor (54) aufweist, der Licht aus dem optischen Pfad (53) empfängt.

2. Druckmeßanordnung nach Anspruch 1, **dadurch gekennzeichnet, daß** die empfangene Lichtmenge von der Auslenkung der optischen Blende (56) hinein in den optischen Pfad (53) abhängt und daß die Sensoreinheit (70) ein kontinuierliches Meßsignal (U_{A}) abgibt, das dem Druck des fluiden Mediums entspricht.

3. Druckmeßanordnung nach Anspruch 1 oder 2, **dadurch gekennzeichnet, daß** die Federmittel (38) eine Blattfeder (38) aufweisen.

4. Druckmeßanordnung nach Anspruch 3, **dadurch gekennzeichnet, daß** die optische Blende (56) mit der Blattfeder (38) verbunden ist.

5. Druckmeßanordnung nach Anspruch 3 oder 4, **dadurch gekennzeichnet, daß** das Meßglied (14) an einem mittleren Abschnitt (42) der Blattfeder (38) angreift.

6. Druckmeßanordnung nach Anspruch 4 oder 5, **dadurch gekennzeichnet, daß** die optische Blende (56) im Bereich des Endes (48) der Blattfeder (38) vorgesehen ist.

7. Druckmeßanordnung nach einem der Ansprüche 3 bis 6, **dadurch gekennzeichnet, daß** die Blattfeder (38) einseitig eingespannt ist und daß Mittel (30, 32, 58) vorgesehen sind, um die Lage der Einspannstelle (34) zu verändern, so daß durch Veränderung der Lage der Einspannstelle (34) der Ansprechschwellenwert (51) eingestellt werden kann.

8. Druckmeßanordnung nach dem Oberbegriff des Anspruchs 1, **dadurch gekennzeichnet, daß** die Federmittel (38) eine einseitig eingespannte Blattfeder (38) aufweisen, daß Mittel (30, 32, 58) vorgesehen sind, um die Lage der Einspannstelle (34) zu verändern, so daß durch Veränderung der Lage der Einspannstelle (34) der Ansprechschwellenwert (51) eingestellt werden kann, und daß die Sensoreinheit (70) einen kontinuierlichen Wegsensor (52-56) aufweist, der in Abhängigkeit von der Auslenkung des Meßgliedes (14) ein kontinuierliches Meßsignal (U_{A}) abgibt, das dem Druck (P1-P2) des fluiden Mediums entspricht.

9. Druckmeßanordnung nach einem der Ansprüche 3 bis 8, **dadurch gekennzeichnet, daß** die Blattfeder (38) an einem Block (34) eingespannt ist, der an einem freien Ende (32) eines einseitig eingespannten elastischen Tragelementes (24) angeordnet ist.

10. Druckmeßanordnung nach einem der Ansprüche 7 bis 9, **dadurch gekennzeichnet, daß** die Mittel (30, 32, 58) zur Veränderung der Lage der Einspannstelle (34) eine Stellschraube (58) zum Einstellen der Auslenkung des freien Endes (32) des Tragelementes (24) aufweisen.

11. Druckmeßanordnung nach Anspruch 9 oder 10, **dadurch gekennzeichnet, daß** das Tragelement (24) eine elektrische Leiterplatte (24) ist.

12. Druckmeßanordnung nach einem der Ansprüche 9 bis 11, **dadurch gekennzeichnet, daß** das freie Ende (40) der Blattfeder (38) und das freie Ende (32) des Tragelementes (24) in entgegengesetzte Richtungen weisen.

13. Druckmeßanordnung nach einem der Ansprüche 9 bis 12, **dadurch gekennzeichnet, daß** die Blattfeder (38) mittels eines ortsfesten Anschlages (50) so vorgespannt ist, daß die Blattfeder (38) in der nicht ausgelenkten Position im wesentlichen keine Kraft auf das Meßglied (14) ausübt.

14. Druckmeßgerät mit wenigstens einem durch eine Membran abgetrennten Druckraum (18, 20), in dem sich ein fluides Medium befindet, **gekennzeichnet durch** eine Druckmeßanordnung (10) nach einem der Ansprüche 1 bis 13, wobei das Meßglied (14) mit der Membran (16) gekoppelt ist.
